(19) Europäisches Patentamt
European Patent Office
Office européen des brevets

(11) **EP 4 187 187 A1**

(12) **EUROPEAN PATENT APPLICATION**
published in accordance with Art. 153(4) EPC

(43) Date of publication:
**31.05.2023 Bulletin 2023/22**

(21) Application number: **20949819.5**

(22) Date of filing: **19.08.2020**

(51) International Patent Classification (IPC):
**F28D 20/02** $^{(2006.01)}$

(52) Cooperative Patent Classification (CPC):
Y02E 60/10; Y02T 10/70; Y02T 10/7072;
Y02T 90/12; Y02T 90/14

(86) International application number:
**PCT/CN2020/110106**

(87) International publication number:
**WO 2022/036608 (24.02.2022 Gazette 2022/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• FENG, Hui
  **Shenzhen, Guangdong 518129 (CN)**
• WANG, Deyuan
  **Shenzhen, Guangdong 518129 (CN)**
• YU, Guojun
  **Shenzhen, Guangdong 518129 (CN)**
• LIU, Yalin
  **Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **HEAT STORAGE APPARATUS, HEAT EXCHANGE APPARATUS, CONTROL METHOD, CONTROL COMPONENT AND THERMAL MANAGEMENT SYSTEM**

(57) This application discloses a heat storage device, a heat exchange device, a control method, a control component, and a heat management system. The heat storage device includes a second connection component and a heat exchange pipe. The second connection component includes a third connection port and a fourth connection port. A path for exchanging heat exchange liquid may be formed between the third connection port, the fourth connection port, the heat exchange pipe, and a liquid storage component, a power pump, and a first connection port and a second connection port of a first connection apparatus that are in the heat exchange device. The heat exchange pipe stores heat exchange liquid, and the heat exchange liquid stored in the heat exchange pipe is used to perform heat exchange with a heat exchange requirement component. This application in which a heat storage capability of the heat exchange liquid is used to perform heat exchange with the heat exchange requirement component is applied to an intelligent vehicle, a self-driving vehicle, a new energy vehicle, an electric vehicle, or a fuel vehicle. When the heat exchange requirement component generates a large amount of heat, the heat generated by the heat exchange requirement component can be quickly absorbed, so that the heat exchange requirement component is quickly cooled.

FIG. 1

**Description**

**TECHNICAL FIELD**

This application relates to the field of new energy vehicle technologies, and in particular, to a heat storage device, a heat exchange device, a control method, a control component, and a heat management system.

**BACKGROUND**

As electric vehicles continuously develop, charging devices such as a movable charging vehicle and a charging pile accordingly emerge. A heat dissipation system is usually disposed in the charging device to dissipate heat for the charging device during charging and discharging of the charging device.

Currently, an air-cooled heat dissipation system is usually used to dissipate heat for the charging device. The air-cooled heat dissipation system mainly includes a heat dissipation hole, a heat dissipation fin, a fan, and the like. When heat needs to be dissipated, the fan is started. The heat generated inside the charging device is dissipated by using air generated by the fan through the heat dissipation hole and the heat dissipation fin.

The charging device generates a large amount of heat in an application scenario of high-power charging and discharging such as fast charging, but the air-cooled heat dissipation system has low heat dissipation efficiency, and therefore cannot effectively dissipate the heat for the charging device in the application scenario.

**SUMMARY**

Embodiments of this application provide a heat storage device, a heat exchange device, a control method, a control component, and a heat management system, to resolve a problem in the related technology that an air-cooled system cannot meet a heat dissipation requirement during high-power charging and discharging of a charging device.

According to a first aspect, a heat management system is provided. The heat management system includes a heat exchange device 10 and a heat storage device 20. The heat exchange device 10 includes a first connection component 101, a power pump 102, a first control component 103, and a liquid storage component 104. The heat storage device 20 includes a second connection component 201 and a heat exchange pipe 202. The first connection component 101 includes a first connection port 1011 and a second connection port 1012. The second connection component 201 includes a third connection port 2011 and a fourth connection port 2012. The first connection port 1011 and the second connection port 1012 are configured to connect to the third connection port 2011 and the fourth connection port 2012 respectively. The second connection port 1012 is connected to a first port of the power pump 102, the first connection port 1011 is connected to a first port of the liquid storage component 104, a second port of the liquid storage component 104 is connected to a second port of the power pump 102, and two ports of the heat exchange pipe 202 are connected to the third connection port 2011 and the fourth connection port 2012 respectively. The heat exchange pipe 202 is configured to store heat exchange liquid, and the heat exchange liquid stored in the heat exchange pipe 202 is used to perform heat exchange with a heat exchange requirement component. The first control component 103 is configured to control the power pump 102 to be enabled or disabled.

In the solution shown in this embodiment of this application, the first connection port 1011 may be a male end or a female end of a quick-connect plug with two ends open and closed, and a connection port that is of the second connection component 201 and that is configured to connect to the first connection port 1011 is a female end or a male end of a quick-connect plug with two ends open and closed that matches the first connection port 1011. Likewise, the second connection port 1012 may also be a male end or a female end of a quick-connect plug with two ends open and closed, and a connection port that is of the second connection component 201 and that is configured to connect to the second connection port 1012 is a female end or a male end of a quick-connect plug with two ends open and closed that matches the second connection port 1012. The liquid storage component 104 may be a liquid storage tank, a liquid storage box, or the like, and the power pump 102 may be a circulating water pump. The heat exchange pipe 202 may be a metal cooling plate, a metal cooling pipe, a plastic cooling pipe, or the like. The heat exchange liquid may be liquid, for example, water, mixed liquor of water, and ethylene glycol, or a phase change material, that absorbs heat, stores heat, discharges heat, and balances temperatures of heat exchange requirement components. The heat exchange requirement component may include various components that need dissipate heat or heat in a carrier of the heat storage device, such as an energy storage component, an electric drive component, and an inverter component. The energy storage component may be a lithium-ion battery, a fuel cell, a power generation device, or the like. The electric driver component may be a permanent-magnet synchronous motor, a belt-driven starter generator (Belt-Driven Starter Generator, BSG), or the like. The inverter component may be a direct-current-alternating-current inverter, an alternating-current-direct-current inverter, or an inverter integrated with a plurality of inverters.

A loop for circulating heat exchange liquid may be formed between the liquid storage component 104, the power pump 102, the first connection port 1011, the second connection port 1012, the third connection port 2011, the fourth connection port 2012, and the heat exchange pipe 202. The power pump 102 in the heat exchange device may enable the heat exchange liquid in the heat exchange pipe 202 and heat exchange liquid in the liquid storage component circulate in the loop, so that heat exchange liquid in the heat storage device is at an appropriate temperature, and the heat exchange liquid in the heat exchange pipe 202 continues performing heat exchange with the heat exchange requirement component when required.

In a possible implementation, the heat exchange device 10 further includes a travel component 105, and the heat storage device 20 further includes a second control component 203. The first connection component 101, the first control component 103, the liquid storage component 104, and the power pump 102 are disposed on the travel component 105. The second control component 203 is configured to send a heat exchange request to the first control component 103 when it is detected that a temperature of the heat exchange requirement component is not within a normal working temperature range, where the heat exchange request carries position information of the heat storage device 20. The first control component 103 is configured to control the travel component 105 to travel to a position corresponding to the position information.

In the solution shown in this embodiment of this application, the travel component 105 may be an auto-driving chassis, an AGV, or the like. The heat storage device may send the heat exchange request by using the second control component 203 when heat exchange is required. After receiving the heat exchange request, the heat exchange device 10 may travel to the heat storage device 20 by using the travel component 105, to perform heat exchange with the heat storage device 20.

In a possible implementation, the first control component 103 is further configured to: send a heat exchange connection request when it is detected that the travel component 105 travels to the position corresponding to the position information, and when it is detected that connection statuses of the first connection port 1011 and the second connection port 1012 are switched from disconnected to connected, control the power pump 102 to be enabled. The second control component 203 is further configured to: after it is detected that connection statuses of the third connection port 2011 and the fourth connection port 2012 are both switched from disconnected to connected, and when it is detected that the temperature of the heat exchange requirement component is a first temperature, send a heat exchange stop request to the first control component 103. The first control component 103 is further configured to: when receiving the heat exchange stop request, control the power pump 102 to be disabled.

In the solution shown in this embodiment of this application, when it is detected that the connection statuses of the first connection port 1011 and the second connection port 1012 are switched from disconnected to connected, the first control component 103 may control the power pump 102 to be enabled, where the power pump 102 may exchange the heat exchange liquid in the heat exchange pipe with the heat exchange liquid in the liquid storage component; and after heat exchange is completed, control the power pump 102 to be disabled.

In a possible implementation, the heat storage device 20 is deployed in a movable charging vehicle, the heat exchange requirement component belongs to a movable charging vehicle, and the heat storage device 20 further includes a second control component 203. The second control component 203 is configured to: receive a charging request sent by an electric vehicle; obtain position information and charging requirement information of the electric vehicle that are carried in the charging request, where the charging requirement information includes at least one of required power and required charging time; calculate, based on the charging requirement information, an estimated temperature of the heat exchange requirement component after discharging ends; and if the estimated temperature of the heat exchange requirement component is not higher than an upper limit of a normal working temperature, control the movable charging vehicle to travel to a position corresponding to the position information to perform charging processing.

In the solution shown in this embodiment of this application, the heat storage device can be deployed in the movable charging vehicle. When charging is required, the electric vehicle can send the charging request to the movable charging vehicle. The second control component 203 receives the charging request sent by the electric vehicle, calculates, based on the charging requirement information, the estimated temperature of the heat exchange requirement component after discharging ends, and if the estimated temperature of the heat exchange demand component is not higher than the upper limit of the normal working temperature, controls the movable charging vehicle to travel to the position corresponding to the position information to perform charging processing. In this way, in a process in which the movable charging vehicle charges the electric vehicle, the temperature of the heat exchange requirement component (such as a battery) of the movable charging vehicle can be maintained at the normal working temperature, to avoid low charging efficiency caused by an excessively high temperature.

In a possible implementation, the charging request further carries a required charging start moment of the electric vehicle, the heat management system further includes an external liquid storage component 30, a first port and a second port of the external liquid storage component 30 are configured to connect to the third connection port 2011 and the fourth connection port 2012 respectively, and the external liquid storage component 30 is configured to store heat exchange liquid. The second control component 203 is further configured to: if the estimated temperature of the heat exchange requirement component is higher than the upper limit of the normal working temperature, calculate, based on the charging requirement information and heat exchange power of the heat exchange device 10 in a case in which a temperature of the heat exchange requirement component is the upper limit of the normal working temperature when discharging ends, an estimated initial temperature required by the heat exchange liquid stored in the heat exchange pipe 202 and estimated heat exchange duration required for adjusting a temperature of the heat exchange liquid stored in the heat exchange pipe 202 to the estimated initial temperature; calculate, based on the position information of the electric vehicle, estimated travel duration for the movable charging vehicle to travel to the electric vehicle; calculate a time difference between a current moment and the required charging start moment; if a sum of the estimated heat exchange duration and the estimated travel duration is greater than the time difference, send an external liquid storage component connection request, and when it is detected that the connection statuses of the third connection port (2011) and the fourth connection port (2012) are both switched from disconnected to connected, control the movable charging vehicle to travel to the position corresponding to the position information to perform charging processing.

In the solution shown in this embodiment of this application, the electric vehicle can reserve charging time. If the estimated heat exchange duration required for adjusting a temperature of the heat exchange liquid to the estimated initial temperature cannot meet the reserved charging time of the electric vehicle, heat exchange cannot be performed. Instead, the external liquid storage component is externally disposed, and then the movable charging vehicle is directly controlled to travel to the position corresponding to the position information to perform charging processing. In the charging process, the heat exchange liquid in the external liquid storage component and the heat exchange liquid in the heat exchange pipe jointly cool the heat exchange requirement component by heat dissipation.

In a possible implementation, the second control component 203 is further configured to: if the sum of the estimated heat exchange duration and the estimated travel duration is not greater than the time difference, control the movable charging vehicle to travel to a target heat exchange position, and send a heat exchange connection request; after it is detected that the connection statuses of the third connection port 2011 and the fourth connection port 2012 are both switched from disconnected to connected, when it is detected that the temperature of the heat exchange liquid stored in the heat exchange pipe 202 reaches the estimated initial temperature, send a heat exchange stop request to the first control component 103, and send a heat exchange disconnection request; and when it is detected that connection statuses of the third connection port 2011 and the fourth connection port 2012 are both switched from connected to disconnected, control the movable charging vehicle to travel to the position corresponding to the position information to perform charging processing. The first control component 103 is further configured to: when it is detected that connection statuses of the first connection port 1011 and the second connection port 1012 are switched from disconnected to connected, control the power pump 102 to be enabled; and when receiving a heat exchange stop request, control the power pump 102 to be disabled.

In the solution shown in this embodiment of this application, if the calculated estimated heat exchange duration required for adjusting the temperature of the heat exchange liquid to the estimated initial temperature can meet the reserved charging time of the electric vehicle, heat exchange can be performed with the heat exchange device. After heat exchange is completed, the movable charging vehicle is controlled to travel to the position corresponding to the position information to perform charging processing.

In a possible implementation, the first connection component 101 further includes a first connection detection circuit 1013, where the first connection detection circuit 1013 is configured to: detect the connection statuses of the first connection port 1011 and the second connection port 10 12; and send the connection statuses of the first connection port 1011 and the second connection port 1012 to the first control component 103. The second connection component 201 further includes a second connection detection circuit 2013, where the second connection detection circuit 2013 is configured to: detect the connection statuses of the third connection port 2011 and the fourth connection port 2012; and send the connection statuses of the third connection port 2011 and the fourth connection port 2012 to the second control component 203.

In a possible implementation, the heat exchange device 10 further includes a temperature adjustment component 106. The temperature adjustment component 106 is configured to adjust a temperature of the heat exchange liquid in the liquid storage component 104 to a target temperature range.

In the solution of this embodiment of this application, the heat exchange device 10 further includes the temperature adjustment component 106. The temperature adjustment component 106 may include a compressor, an evaporator, a heat exchanger, a condenser, a fan, a heat dissipation fan, a positive temperature coefficient (Positive Temperature Coefficient, PTC) heater, and the like. The temperature adjustment component 106 can adjust the temperature of the heat exchange liquid in the liquid storage component 104 to the target temperature range.

In a possible implementation, a first port and a second port of the temperature adjustment component 106 are connected to a third port of the liquid storage component 104 and a third port of the power pump 102 respectively. The first control component 103 is configured to: when it is detected that the temperature of the heat exchange liquid in the liquid storage component 104 is higher than an upper limit of the target temperature range, control the temperature adjustment component 106 to start a cooling mode, and control the power pump 102 to be enabled, so that the heat exchange liquid in the liquid storage component 104 circulates in the liquid storage component 104, the power pump

102, and the temperature adjustment component 106; and when it is detected that the temperature of the heat exchange liquid in the liquid storage component 104 is within the target tempe rature range, control the temperature adjustment component 106 and the power pump 102 to be disabled.

In the solution shown in this embodiment of this application, the temperature adjustment component 106 may cool the heat exchange liquid in the liquid storage component 104.

In a possible implementation, the first control component 103 is further configured to: when it is detected that the temperature of the heat exchange liquid in the liquid storage component 104 is lower than a lower limit of the target temperature range, control the temperature adjustment component 106 to start a heating mode, and control the power pump 102 to be enabled, so that the heat exchange liquid in the liquid storage component 104 circulates in the liquid storage component 104, the power pump 102, and the temperature adjustment component 106; and when it is detected that the temperature of the heat exchange liquid in the liquid storage component 104 is within the target temperature range, control the temperature adjustment component 106 and the power pump 102 to be disabled.

In the solution shown in this embodiment of this application, the temperature adjustment component 106 may heat the heat exchange liquid in the liquid storage component 104.

According to a second aspect, a heat storage device is provided. The heat storage device includes a second connection component 201 and a heat exchange pipe 202.

The second connection component 201 includes a third connection port 2011 and a fourth connection port 2012, and the third connection port 2011 and the fourth connection port 2012 are configured to connect respectively to a first connection port 1011 and a second connection port 1012 that are included in a first connection component 101 in a heat exchange device.

Two ports of the heat exchange pipe (202) are connected to the third connection port 2011 and the fourth connection port 2012 respectively, the first connection port 1012 is connected to a first port of a power pump 102 in the heat exchange device, the second connection port 1012 is connected to a first port of a liquid storage component 104 in the heat exchange device, and a second port of the liquid storage component 104 is connected to a second port of the power pump 102.

The heat exchange pipe 202 is configured to store heat exchange liquid, and the heat exchange liquid stored in the heat exchange pipe 202 is used to perform heat exchange with a heat exchange requirement component.

In a possible implementation, the heat storage device further includes a second control component 203.

The second control component 203 is configured to send a heat exchange request to a first control component 103 in the heat exchange device when it is detected that a temperature of the heat exchange requirement component is not within a normal working temperature range, where the heat exchange request carries position information of the heat storage device 20.

In a possible implementation, the second control component 203 is further configured to: after it is detected that connection statuses of the third connection port 2011 and the fourth connection port 2012 are both switched from disconnected to connected, and when it is detected that the temperature of the heat exchange requirement component is a first temperature, send a heat exchange stop request to the first control component 103.

In a possible implementation, the heat storage device is deployed in a movable charging vehicle, the heat exchange requirement component belongs to the movable charging vehicle, and the heat storage device further includes a second control component 203.

The second control component 203 is configured to: receive a charging request sent by an electric vehicle; obtain position information and charging requirement information of the electric vehicle that are carried in the charging request, where the charging requirement information includes at least one of required power and required charging time; calculate, based on the charging requirement information, an estimated temperature of the heat exchange requirement component after discharging ends; and if the estimated temperature of the heat exchange requirement component is not higher than an upper limit of a normal working temperature, control the movable charging vehicle to travel to a position corresponding to the position information to perform charging processing.

In a possible implementation, the charging request further carries a required charging start moment of the electric vehicle.

The second control component 203 is further configured to: if the estimated temperature of the heat exchange requirement component is higher than the upper limit of the normal working temperature, calculate, based on the charging requirement information and heat exchange power of the heat exchange device in a case in which a temperature of the heat exchange requirement component is the upper limit of the normal working temperature when discharging ends, an estimated initial temperature required by the heat exchange liquid stored in the heat exchange pipe 202 and estimated heat exchange duration required for adjusting a temperature of the heat exchange liquid stored in the heat exchange pipe 202 to the estimated initial temperature; calculate, based on the position information of the electric vehicle, estimated travel duration for the movable charging vehicle to travel to the electric vehicle; calculate a time difference between a current moment and the required charging start moment; if a sum of the estimated heat exchange duration and the estimated travel duration is greater than the time difference, send an external liquid storage component connection request, where the external liquid storage component connection request is used to request to connect to an external liquid storage component 30, a first port and a second port of the external liquid storage component 30 are configured to connect to the third connection port 2011 and the fourth connection port 2012 respectively, and the external liquid storage component 30 is configured to store heat exchange liquid; and when it is detected that connection statuses of the third connection port 2011 and the fourth connection port 2012 are both switched from disconnected to connected, control the movable charging vehicle to travel to the position corresponding to the position information to perform charging processing.

In a possible implementation, the second control component 203 is further configured to: if the sum of the estimated heat exchange duration and the estimated travel duration is not greater than the time difference, control the movable charging vehicle to travel to a target heat exchange position, and send a heat exchange connection request; after it is detected that the connection statuses of the third connection port 2011 and the fourth connection port 2012 are both switched from disconnected to connected, when it is detected that the temperature of the heat exchange liquid stored in the heat exchange pipe 202 reaches the estimated initial temperature, send a heat exchange stop request to the first control component 103, and send a heat exchange disconnection request; and when it is detected that connection statuses of the third connection port 2011 and the fourth connection port 2012 are both switched from connected to disconnected, control the movable charging vehicle to travel to the position corresponding to the position information to perform charging processing.

In a possible implementation, the second connection component 201 further includes a second connection detection circuit 2013, and the second connection detection circuit 2013 is configured to detect the connection statuses of the third connection port 2011 and the fourth connection port 2012, and send the connection statuses of the third connection port 2011 and the fourth connection port 2012 to the second control component 203.

According to a third aspect, a heat exchange device is provided. The heat exchange device includes a first connection component 101, a power pump 102, a first control component 103 and a liquid storage component 104.

The first connection component 101 includes a first connection port 1011 and a second connection port 1012, and the first connection port 1011 and the second connection port 1012 are configured to connect respectively to a third connection port 2011 and a fourth connection port 2012 that are included in a second connection component 201 in a heat storage device.

The first connection port 1011 is connected to a first port of the liquid storage component 104, the second connection port 1012 is connected to a first port of the power pump 102, the second connection port 1012 is connected to the first port of the liquid storage component 104, a second port of the liquid storage component 104 is connected to a second port of the power pump 102, the first connection port 1012 is connected to the first port of the power pump 102, two ports of a heat exchange pipe 202 in the heat storage device are connected to the third connection port 2011 and the fourth connection port 2012 respectively, the liquid storage component 104 is configured to store heat storage liquid, the heat exchange pipe 202 is configured to store heat exchange liquid, and the heat exchange liquid stored in the heat exchange pipe 202 is used to perform heat exchange with a heat exchange requirement component.

The first control component 103 is configured to control the power pump 102 to be enabled or disabled.

In a possible implementation, the heat exchange device 10 further includes a travel component 105.

The first connection component 101, the first control component 103, the liquid storage component 104, and the power pump 102 are disposed on the travel component 105.

The first control component 103 is configured to: receive a heat exchange request sent by a second control component 203 in the heat storage device when it is detected that a temperature of the heat exchange requirement component is not within a normal working temperature range, and control the travel component 105 to travel to a position corresponding to position information of the heat storage device carried in the heat exchange request.

In a possible implementation, the first control component 103 is further configured to: send a heat exchange connection request when it is detected that the travel component 105 travels to the position corresponding to the position information, and when it is detected that connection statuses of the first connection port 1011 and the second connection port 1012 are switched from disconnected to connected, control the power pump 102 to be enabled.

The first control component 103 is further configured to: when receiving a heat exchange stop request sent by the second control component 203, control the power pump 102 to be disabled.

In a possible implementation, the first connection component 101 further includes a first connection detection circuit 1013, where the first connection detection circuit 1013 is configured to: detect the connection statuses of the first connection port 1011 and the second connection port 10 12; and send the connection statuses of the first connection port 1011 and the second connection port 1012 to the first control component 103.

In a possible implementation, the heat exchange device further includes a temperature adjustment component 106.

The temperature adjustment component 106 is configured to adjust a temperature of the heat exchange liquid in the liquid storage component 104 to a target temperature range.

In a possible implementation, a first port and a second port of the temperature adjustment component 106 are connected to a third port of the liquid storage component 104 and a third port of the power pump 102 respectively.

The first control component 103 is configured to: when it is detected that the temperature of the heat exchange liquid in the liquid storage component 104 is higher than an upper limit of the target temperature range, control the temperature adjustment component 106 to start a cooling mode, and control the power pump 102 to be enabled, so that the heat exchange liquid in the liquid storage component 104 circulates in the liquid storage component 104, the power pump 102, and the temperature adjustment component 106; and when it is detected that the temperature of the heat exchange liquid in the liquid storage component 104 is within the target temperature range, control the temperature adjustment component 106 and the power pump 102 to be disabled.

In a possible implementation, the first control component 103 is further configured to: when it is detected that the temperature of the heat exchange liquid in the liquid storage component 104 is lower than a lower limit of the target temperature range, control the temperature adjustment component 106 to start a heating mode, and control the power pump 102 to be enabled, so that the heat exchange liquid in the liquid storage component 104 circulates in the liquid storage component 104, the power pump 102, and the temperature adjustment component 106; and when it is detected that the temperature of the heat exchange liquid in the liquid storage component 104 is within the target temperature range, control the temperature adjustment component 106 and the power pump 102 to be disabled.

According to the fourth aspect, a control method for a heat storage device is provided. The control method is applied to the heat storage device according to claim 1. The heat storage device further includes a second control component 203, and the control method includes the following steps.

The second control component 203 receives a charging request sent by an electric vehicle, where the charging request carries position information and charging requirement information of the electric vehicle, and the charging requirement information includes at least one of required power and required charging time.

The second control component 203 calculates, based on the charging requirement information, an estimated temperature of the heat exchange requirement component after discharging ends, and if the estimated temperature of the heat exchange requirement component is not higher than an upper limit of a normal working temperature, controls a movable charging vehicle to travel to a position corresponding to the position information to perform charging processing.

In a possible implementation, the charging request further carries a required charging start moment of the electric vehicle, and the control method further includes the following steps.

If the estimated temperature of the heat exchange requirement component is higher than the upper limit of the normal working temperature, the second control component 203 calculates, based on the charging requirement information and heat exchange power of the heat exchange device in a case in which the temperature of the heat exchange requirement component is the upper limit of the normal working temperature when discharging ends, an estimated initial temperature required for heat exchange liquid stored in the heat exchange pipe 202 and estimated heat exchange duration required for adjusting a temperature of the heat exchange liquid stored in the heat exchange pipe 202 to the estimated initial temperature.

The second control component 203 calculates, based on the position information of the electric vehicle, estimated travel duration in which the movable charging vehicle travels to the electric vehicle, and calculates a time difference between a current moment and the required charging start moment.

If a sum of the estimated heat exchange duration and the estimated travel duration is greater than the time difference, the second control component 203 sends an external liquid storage component connection request, and when it is detected that connection statuses of the third connection port 2011 and the fourth connection port 2012 are both switched from disconnected to connected, controls the movable charging vehicle to travel to the position corresponding to the position information to perform charging processing.

In a possible implementation, the control method further includes the following steps.

If the sum of the estimated heat exchange duration and the estimated travel duration is not greater than the time difference, the second control component 203 controls the movable charging vehicle to travel to a target heat exchange position, and sends a heat exchange connection request.

After it is detected that connection statuses of the third connection port 2011 and the fourth connection port 2012 are both switched from disconnected to connected, when it is detected that the temperature of the heat exchange liquid stored in the heat exchange pipe 202 reaches the estimated initial temperature, the second control component 203 sends a heat exchange stop request to a first control component 103 in a heat exchange device, and sends a heat exchange disconnection request.

When it is detected that the connection statuses of the third connection port 2011 and the fourth connection port 2012 are both switched from connected to disconnected, the second control component 203 controls the movable charging vehicle to travel to the position corresponding to the position information to perform charging processing.

According to fifth aspect, a control method for a heat exchange system. The control method is applied to the heat exchange device according to claim 8. The heat exchange device further includes a travel component 105, and the control method includes the following steps.

A first control component 103 receives a heat exchange request sent by a heat storage device, where the heat exchange request carries position information of the heat storage device.

The first control component 103 controls the travel component 105 to travel to a position corresponding to the position information.

The first control component 103 sends a heat exchange connection request when it is detected that the travel component 105 travels to the position corresponding to the position information, and when it is detected that connection statuses of a first connection port 1011 and a second connection port 1012 are switched from disconnected to connected, controls the power pump 102 to be enabled.

When receiving a heat exchange stop request sent by a second control component 203, the first control component 103 controls the power pump 102 to be disabled.

In a possible implementation, the control method further includes the following steps.

When it is detected that a temperature of heat exchange liquid in the liquid storage component 104 is higher than an upper limit of a target temperature range, the first control component 103 controls the temperature adjustment component (106) to start a cooling mode, and controls the power pump 102 to be enabled, so that the heat exchange liquid in the liquid storage component 104 circulates in the liquid storage component 104, the power pump 102, and the temperature adjustment component 106.

When it is detected that the temperature of the heat exchange liquid in the liquid storage component 104 is within the target temperature range, the first control component 103 controls the temperature adjustment component 106 and the power pump 102 to be disabled.

In a possible implementation, the control method further includes the following steps.

When it is detected that the temperature of the heat exchange liquid in the liquid storage component 104 is lower than a lower limit of the target temperature range, the first control component 103 controls the temperature adjustment component 106 to start a heating mode, and controls the power pump 102 to be enabled, so that the heat exchange liquid in the liquid storage component 104 circulates in the liquid storage component 104, the power pump 102, and the temperature adjustment component 106.

When it is detected that the temperature of the heat exchange liquid in the liquid storage component 104 is within the target temperature range, the first control component 103 controls the temperature adjustment component 106 and the power pump 102 to be disabled.

According to a sixth aspect, a control component in a heat storage device is provided. The control component includes a processor and a memory, the memory stores at least one instruction, and the instruction is loaded and executed by the processor to implement an operation performed by the control method according to the fourth aspect.

According to a seventh aspect, a control component in a heat exchange device is provided. The control component includes a processor and a memory, the memory stores at least one instruction, and the instruction is loaded and executed by the processor to implement an operation performed by the control method according to the fifth aspect.

The technical solutions provided in this application include at least the following beneficial effects:

In this application, the heat exchange liquid stored in the heat exchange pipe in the heat storage device is used to perform heat exchange with the heat exchange requirement component, and the heat exchange liquid may absorb heat generated by the heat exchange requirement component, to cool the heat exchange requirement component. In addition, a path for circulating heat exchange liquid may be formed between the third connection port, the fourth connection port, the heat exchange pipe, and the liquid storage component, the power pump, the first connection port and the second connection port of the first connection apparatus that are in the heat exchange device in this application. The power pump in the heat exchange device may enable the heat exchange liquid in the heat storage device and the heat exchange liquid in the liquid storage component circulate in the path, so that the heat exchange liquid in the heat storage device is at an appropriate temperature, so as to continue performing heat exchange with the heat exchange requirement component when required.

## BRIEF DESCRIPTION OF DRAWINGS

FIG. 1 is a schematic diagram of a heat management system according to an embodiment of this application;
FIG. 2 is a schematic diagram of another heat management system according to an embodiment of this application;
FIG. 3 is a schematic diagram of still another heat management system according to an embodiment of this application;
FIG. 4 is a schematic diagram of yet another heat management system according to an embodiment of this application;
FIG. 5 is a schematic diagram of still yet another heat management system according to an embodiment of this application;
FIG. 6 is a schematic diagram of a further heat management system according to an embodiment of this application;
FIG. 7 is a schematic diagram of an external liquid storage component and a heat storage device according to an embodiment of this application;

FIG. 8 is a flowchart of a heat management method according to an embodiment of this application;

FIG. 9A and FIG. 9B are a flowchart of another heat management method according to an embodiment of this application;

FIG. 10 is a schematic diagram of a structure of a control component in a heat storage decide according to an embodiment of this application; and

FIG. 11 is a schematic diagram of a structure of a control component in a heat exchange device according to an embodiment of this application.

Legends:

10. Heat exchange device; 20. Heat storage device; 30. External liquid storage component; 101. First connection component; 102. Power pump; 103. First control component; 104. Liquid storage component; 105. Travel component; 106. Temperature adjustment component; 201. Third connection component; 202. Heat exchange pipe; 203. Second control component; 1011. First connection port; 1012. Second connection port; 1013. First connection detection circuit; 2011. Third connection port; 2012. Second connection port; and 2013. Second connection detection circuit.

**DESCRIPTION OF EMBODIMENTS**

To make the objectives, technical solutions, and advantages of this application clearer, the following further describes implementations of this application in detail with reference to the accompanying drawings.

Embodiments of this application provide a heat management system. The heat management system includes a heat storage device and a heat exchange device. The heat storage device may be deployed in a device such as a movable charging vehicle, a charging pile, or an electric vehicle. The heat storage device is configured to absorb heat generated by a heat exchange requirement component in a device in which the heat storage device is located, and is further configured to provide heat for the heat exchange requirement component. The heat exchange device may be deployed independently, for example, deployed in a form of a movable heat exchange vehicle or a fixed heat exchange base station. The heat exchange device may perform heat exchange with the heat storage device, so as to implement heat management on the heat storage device.

When the heat storage device is deployed in a movable device, the heat exchange device may be deployed in a form of a movable heat exchange device, or may be deployed in a form of a fixed heat exchange device. When the heat exchange device is deployed in the form of the movable heat exchange device, when the heat storage device has a heat exchange requirement, a carrier of the heat storage device may be moved to the movable heat exchange device, or a carrier of the heat storage device and the movable heat exchange device are moved to a same place, so as to complete heat exchange with the heat exchange device. When the heat exchange device is deployed in the form of the fixed heat exchange device, when the heat storage device has a heat exchange requirement, a carrier of the heat storage device may be moved to the fixed heat exchange device, so as to complete heat exchange with the heat exchange device.

When the heat storage device is deployed in a non-movable device, the heat exchange device may be deployed in a form of a movable heat exchange device. When the heat storage device needs to exchange heat, the movable heat exchange device may move to the heat storage device to perform heat exchange with the heat storage device.

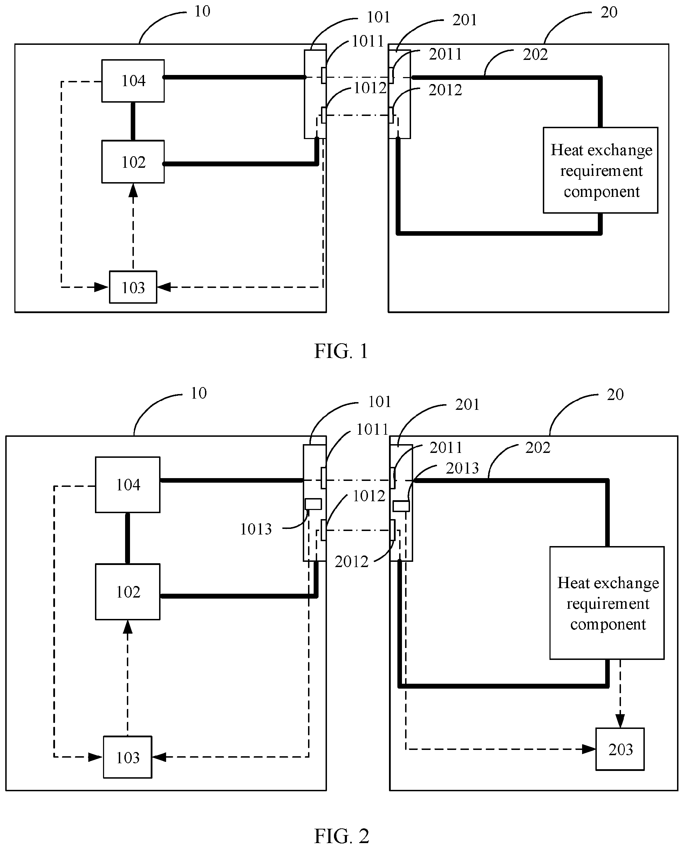

FIG. 1 shows a heat management system provided in an embodiment of this application. The heat management system includes a heat exchange device 10 and a heat storage device 20. The heat exchange device 10 includes a first connection component 101, a first control component 103, a liquid storage component 104, and a power pump 102. The heat storage device 20 includes a second connection component 201 and a heat exchange pipe 202. The first connection component 101 includes a first connection port 1011 and a second connection port 1012. The second connection component 201 includes a third connection port 2011 and a fourth connection port 2012. The first connection port 1011 and the second connection port 1012 are configured to connect to the third connection port 2011 and the fourth connection port 2012 respectively. The second connection port 1012 is connected to a first port of the power pump 102, the first connection port 1011 is connected to a first port of the liquid storage component 104, a second port of the liquid storage component 104 is connected to a second port of the power pump 102, and two ports of the heat exchange pipe 202 are connected to the third connection port 2011 and the fourth connection port 2012 respectively. The heat exchange pipe 202 is configured to store heat exchange liquid, and the heat exchange liquid stored in the heat exchange pipe 202 is used to perform heat exchange with a heat exchange requirement component. The first control component 103 is configured to control the power pump 102 to be enabled or disabled.

The first connection port 1011 may be a male end or a female end of a quick-connect plug with two ends open and closed, and a connection port that is of the second connection component 201 and that is configured to connect to the first connection port 1011 is a female end or a male end of a quick-connect plug with two ends open and closed that matches the first connection port 1011. Likewise, the second connection port 1012 may also be a male end or a female end of a quick-connect plug with two ends open and closed, and a connection port that is of the second connection component 201 and that is configured to connect to the second connection port 1012 is a female end or a male end of a quick-connect plug with two ends open and closed that matches the second connection port 1012.

The liquid storage component 104 may be a liquid storage tank, a liquid storage box, or the like, and the power pump 102 may be a circulating water pump.

The heat exchange pipe 202 may be a metal cooling plate, a metal cooling pipe, a plastic cooling pipe, or the like. The heat exchange liquid may be liquid, for example, water, mixed liquor of water, and ethylene glycol, or a phase change material, that absorbs heat, stores heat, discharges heat, and balances temperatures of heat exchange requirement components.

The heat exchange requirement component may include various components that need dissipate heat or heat in a carrier of the heat storage device, such as an energy storage component, an electric drive component, and an inverter component. The energy storage component may be a lithium-ion battery, a fuel cell, a power generation device, or the like. The electric driver component may be a permanent-magnet synchronous motor, a belt-driven starter generator (Belt-Driven Starter Generator, BSG), or the like. The inverter component may be a direct-current-alternating-current inverter, an alternating-current-direct-current inverter, or an inverter integrated with a plurality of inverters.

In the solution of this embodiment of this application, in the heat exchange device 10, the second connection port 1012 may be connected to the first port of the power pump 102 through a pipe, the first connection port 1012 may be connected to the first port of the liquid storage component 104 through a pipe, and the second port of the liquid storage component 104 may be connected to the second port of the power pump 102 through a pipe. The pipe herein used to connect the ports may be the same as the heat exchange pipe, namely, may be a metal cooling plate, a metal cooling pipe, a plastic cooling pipe, or the like.

In the heat storage device 20, each heat exchange requirement component may be provided with a heat exchange path used for heat exchange, and the heat exchange path passes through the heat exchange requirement component. The heat exchange paths in the heat exchange requirement components may be connected to each other through the heat exchange pipe 202, or the heat exchange pipe 202 may pass through the heat exchange paths. In addition, refer to FIG. 1. One end of the heat exchange pipe 202 is connected to the third connection port 2011, and the other end is connected to the fourth connection port 2012.

When being not connected, the first connection port 1011, the second connection port 1012, the third connection port 2011, and the fourth connection port 2012 are in a disabled state. When the heat storage device 20 needs to perform heat exchange, the first connection port 1011 and the second connection port 1012 are connected to the third connection port 2011 and the fourth connection port 2012 respectively, and the first connection port 1011, the second connection port 1012, the third connection port 2011, and the fourth connection port 2012 are switched to an enabled state after being connected. In this way, after the four connection ports are separately connected, a loop for circulating heat exchange liquid is formed between the liquid storage component 104, the power pump 102, the first connection port 1011, the second connection port 1012, the third connection port 2011, the fourth connection port 2012, and the heat exchange pipe 202.

When it is detected that the first connection port 1011 and the second connection port 1012 are both switched from a disconnected state to a connected state, the first control component 103 may enable the power pump 102, control the power pump 102 to import the heat exchange liquid in the second heat exchange pipe 202 into the liquid storage component 104 in the heat exchange device 10, and export heat exchange liquid in the liquid storage component 104 to the second heat exchange pipe 202 in the heat storage device 20. Heat exchange duration may be set based on power of the power pump and mass of heat exchange liquid in the heat storage device 20. After the power pump 102 is enabled, the first control component 103 performs timing. When the specified heat exchange duration is reached, the first control component 103 may control the power pump 102 to be disabled.

Refer to FIG. 2. To ensure that the first control component 103 can detect connection statuses of the first connection port 1011 and the second connection port 1012, a first connection detection circuit 1013 may be disposed in the first connection component 101, and a second connection detection circuit 2013 may be disposed in the second connection component 201. The first connection detection circuit 1013 includes a first end of a first communication connector and a first end of a second communication connector, and the two ends correspond to the first connection port 1011 and the second connection port 1012 respectively. Correspondingly, the second connection detection circuit 2013 includes a second end of the first communication connector and a second end of the second communication connector, and the two ends correspond to the third connection port 2011 and the fourth connection port 2012 respectively. A first end and a second end of each communication connector are a male end and a female end respectively, and the two ends may be connected in a matched manner.

In addition, when the first connection port 1011 and the third connection port 2011 or the fourth connection port 2012 that is configured to connect to the first connection port 1011 are in a connected state, it needs to be ensured that ends of communication connectors corresponding to the two connection ports are connected to each other and are in a connected state. When the first connection port 1011 and the third connection port 2011 or the fourth connection port 2012 that is configured to connect to the first connection port are in a disconnected state, it needs to be ensured that the ends of the communication connectors corresponding to the two connection ports are disconnected from each other and are in a disconnected state. Likewise, when the second connection port 1012 and the third connection port 2011 or the fourth connection port 2012 that is configured to connect to the second connection port 1012 are in a connected state, it needs to be ensured that ends of communication connectors corresponding to the two connection ports are connected to each other and are in a connected state. When the second connection port 1012 and the third connection port 2011 or the fourth connection port 2012 that is configured to connect to the first connection port are in a disconnected state, it needs to be ensured that the ends of the communication connectors corresponding to the two connection ports are disconnected from each other and are also in a disconnected state.

When the first connection port 1011, the second connection port 1012, the third connection port 2011, and the fourth connection port 2012 are in a connected state, two ends of the corresponding first communication connector are also in a connected state, and two ends of the second communication connector are also in a connected state. In this way, the first connection detection circuit 1013 and the second connection detection circuit 2013 form a complete interlock circuit by using the first communication connector and the second communication connector. When one or both of the first connection port 1011 and the second connection port 1012 are not connected, the first connection detection circuit 1013 sends a low level signal to the first control component 103. When both of the first connection port 1011 and the second connection port 1012 are connected, the first connection detection circuit 1013 sends a high level signal to the first control component 103. If the first control component 103 receives the low level signal at a previous moment, and receives the high level signal at a next moment, it may be determined that connection statuses of the first connection port 1011 and the second connection port 1012 both change from disconnected to connected.

In a possible implementation, as shown in FIG. 2, the heat storage device 20 may further include a second control component 203. The second control component 203 may monitor, in real time by using a temperature sensor in each heat exchange requirement component, a temperature of a corresponding heat exchange requirement component. In a heat exchange process, when the second control component 203 detects that each heat exchange requirement component reaches a required temperature, the second control component 203 may send a heat exchange stop request to the first control component 103.

In the solution of this embodiment of this application, communications modules such as a wireless transmission communications module, a 4th generation mobile communication technology (the 4th generation mobile communication technology, 4G) communications module, and a 5th generation mobile communication technology (the 5th generation mobile communication technology, 5G) communications module may be disposed on the first control component 103 and the second control component 203. In this way, the second control component 203 may send the heat exchange stop request to the first control component 103 by using the communications module. Corresponding to different communications modules, forms of the heat exchange stop request may also be different.

In addition, the first control component 103 and the second control component 203 may further communicate with each other in a wired manner.

For example, the first control component 103 may be connected to a communication signal cable and led out from the first connection component 101. A first end of a low-voltage communication connector may be disposed at an end at which the communication signal cable is led out. Correspondingly, the second control component 203 may also be connected to the communication signal cable and led out from the second connection component 201. A second end of the low-voltage communication connector may be disposed at the end at which the communication signal cable is led out, and the first end and the second end may be a male end and a female end respectively, and may be connected in a matched manner. When the heat exchange device 10 and the heat storage device 20 perform heat exchange, the first end and the second end may be connected in a matched manner. In this way, the second control component 203 may send the heat exchange stop request to the first control component 103 through the communication signal cable. The heat exchange stop request may be in a plurality of forms, for example, in a CAN signal form.

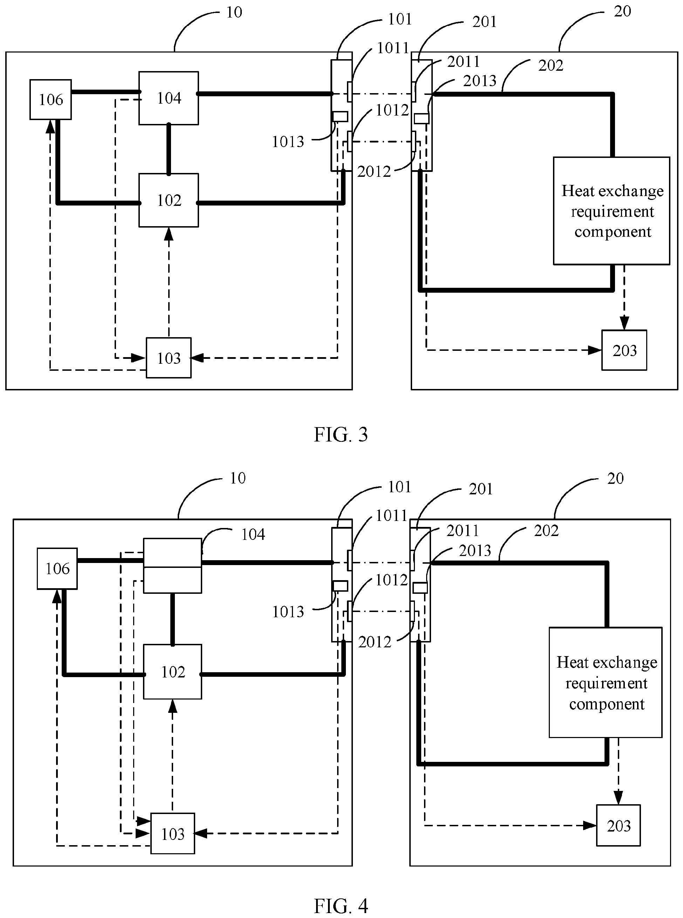

In a possible implementation, to ensure that the heat exchange liquid in the liquid storage component 104 is within the specified temperature range, a temperature adjustment component 106 may be disposed in the heat exchange device 10. The temperature adjustment component 106 may include a compressor, an evaporator, a heat exchanger, a condenser, a fan, a heat dissipation fan, a positive temperature coefficient (Positive Temperature Coefficient, PTC) heater, and the like. As shown in FIG. 3, a first port and a second port of the temperature adjustment component 106 are connected to a third port of the liquid storage component 104 and a third port of the power pump 102 respectively.

In the solution of this embodiment of this application, the power pump 102 may have three ports, which are connected to the temperature adjustment component 106, the liquid storage component 104, and the first connection port 1011 respectively.

A temperature sensor may be disposed in the liquid storage component 104, and the temperature sensor may send detected temperature information to the first control component 103. When it is detected that the temperature of the heat exchange liquid in the liquid storage component 104 is higher than an upper limit of a target temperature range, the first control component 103 controls the temperature adjustment component 106 to start a cooling mode, and controls the power pump 102 to be enabled to enter a first working state. In the first working state of the power pump 102, a first port is disabled, and a second port and the third port are enabled, so that the heat exchange liquid in the liquid storage component 104 circulates in the liquid storage component 104, the power pump 102, and the temperature adjustment component 106. When it is detected that the temperature of the heat exchange liquid in the liquid storage component 104 is within the target temperature range again, the first control component 103 controls the temperature adjustment component (106) and the power pump 102 to be disabled. The target temperature range may be set according to an actual requirement, for example, from 15 degrees Celsius to 35 degrees Celsius.

When it is detected that the temperature of the heat exchange liquid in the liquid storage component 104 is lower than a lower limit of the target temperature range, the first control component 103 controls the temperature adjustment component 106 to start a heating mode, and controls the power pump 102 to be enabled to enter the first working state, so that the heat exchange liquid in the liquid storage component 104 circulates in the liquid storage component 104, the power pump 102, and the temperature adjustment component 106; and when it is detected that the temperature of the heat exchange liquid in the liquid storage component 104 is within the target temperature range again, controls the temperature adjustment component 106 and the power pump 102 to be disabled.

In a possible implementation, to ensure that the heat exchange liquid in the heat storage device 20 does not affect the temperature of the heat exchange liquid originally stored in the liquid storage component 104, the two types of heat exchange liquid may be stored independently. For example, as shown in FIG. 4, the liquid storage component 104 may be disposed in a layered structure.

In the solution of this embodiment of this application, an upper layer of the liquid storage component 104 is used to store the heat exchange liquid from the heat storage device 20, and a lower layer is used to store heat exchange liquid for importing into the heat storage device 20. In addition, to ensure that the heat exchange liquid in the heat storage device 20 to be imported into the upper layer of the liquid storage component 104, an exhaust hole may be disposed on the top of the upper layer of the liquid storage component 104.

When the liquid storage component 104 is disposed in the layered structure, a second port and the third port of the liquid storage component 104 may be disposed at the upper layer of the liquid storage component 104, and a first port may be disposed at the lower layer of the liquid storage component 104.

When the liquid storage component 104 is disposed in the layered structure, when the heat exchange device 10 and the heat storage device 20 perform heat exchange, the first control component 103 may enable the power pump 102 to enter a second working state. In the second working state, the third port is disabled, and the first port and the second port are enabled, so that the heat exchange liquid in the heat storage device 20 is imported into the upper layer of the liquid storage component 104 in the heat exchange device 10, and the heat exchange liquid in the lower layer of the liquid storage component 104 is imported into the second heat exchange pipe 202 in the heat storage device 20.

In addition, temperature sensors may be disposed at both the upper layer and the lower layer of the liquid storage component 104 in this case. The temperature sensors send detected temperature information of heat exchange liquid at the upper layer and the lower layer to the first control component 103. When it is detected that a temperature of heat exchange liquid at any layer is not within the target temperature range, the first control component 103 may control the power pump 102 to be enabled to enter the first working state, so that the heat exchange liquid at the upper layer of the liquid storage component 104 is exported to the temperature adjustment component 106 for temperature adjustment, and then is imported into the lower layer of the liquid storage component 104. Then the power pump is switched to a third working state. The heat exchange liquid at the lower layer is imported into the upper layer, to circulate the heat exchange liquid between the upper layer and the lower layer. Until it is detected that temperatures of the heat exchange liquid at the two layers are within the target temperature range, the first control component 103 controls the power pump 102 and the temperature adjustment component 106 to be disabled.

In a possible implementation, in addition to the power pump 102, a temperature adjustment power pump 107 may be disposed in the heat exchange device 10. In this way, the power pump 102 is configured to perform heat exchange between the heat exchange device 10 and the heat storage device 20, and the temperature adjustment power pump 107 is configured to provide power when temperature adjustment is performed on the heat exchange liquid in the liquid storage component 104.

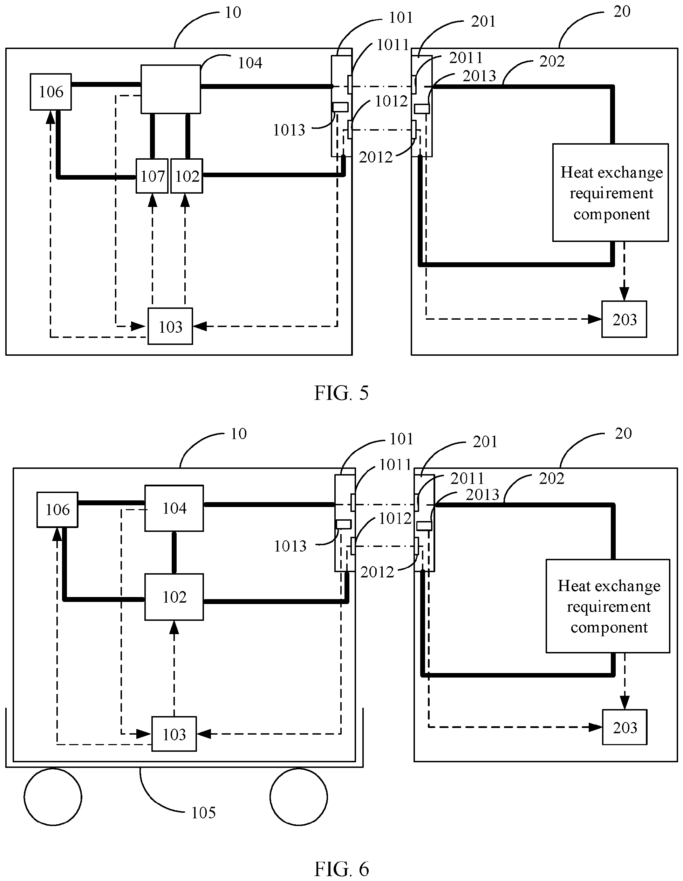

As shown in FIG. 5, a first port of the temperature adjustment power pump 107 is connected to the temperature adjustment component 106, and a second port of the temperature adjustment power pump 107 is connected to the liquid storage component 104.

Correspondingly, when temperature adjustment is performed on the heat exchange liquid in the liquid storage component 104, the first control component 103 starts the heating mode or the cooling mode of the temperature adjustment component 106, and enables the temperature adjustment power pump 107, so that the heat exchange liquid in the liquid storage component 104 circulates between the liquid storage component 104, the temperature adjustment component 106, and the temperature adjustment power pump 107, thereby achieving a purpose of temperature adjustment.

In a possible implementation, as shown in FIG. 6, the heat exchange device 10 may further include a travel component 105, for example, an auto-driving chassis, or an AGV. In this way, the heat exchange device may be a movable heat exchange device, for example, a movable heat exchange vehicle.

In an implementation, the second control component 203 in the heat storage device 20 may send a heat exchange request to the first control component 103 when it is detected that the temperature of the heat exchange requirement component is not within a normal working temperature range. The heat exchange request carries position information of the heat storage device 20. In addition, the second control component 203 may send the heat exchange request to a management end, and the management end obtains position information of each heat exchange device, and selects a heat exchange device 10 that is in an idle state and closest to the heat storage device 20 as a heat exchange device for performing heat exchange with the heat storage device 20. The idle state herein indicates that the heat exchange device is executing a heat exchange task.

Herein, to ensure that the heat storage device 20 to communicate with the heat exchange device 10, the management end may return communication information of the selected heat exchange device 10 to the heat storage device 20, so that a communication connection can be established between the second control component 203 in the heat storage device 20 and the first control component 103 in the heat exchange device 10.

The management end forwards the heat exchange request to the selected heat exchange device 10, and the first control component 103 in the heat exchange device 10 receives the heat exchange request. After receiving the heat exchange request, the first control component 103 may send the position information to the travel component 105, and the travel component 105 travels, based on a navigation apparatus, the heat exchange device 10 to a position corresponding to the position information. The navigation apparatus is, for example, a GNSS (Global Navigation Satellite System, global navigation satellite apparatus).

When it is detected that the travel component 105 travels to the position corresponding to the position information, the first control component 103 sends a heat exchange connection request. When the heat exchange device 10 is provided with a mechanical arm, the heat exchange connection request may be a connection instruction sent to the mechanical arm. The mechanical arm connects the first connection port 1011 and the second connection port 1012 in the heat exchange device 10 to the third connection port 2011 and the fourth connection port 2012 in the heat storage device 20 respectively. When it is detected that the connection statuses of the first connection port 1011 and the second connection port 1012 are switched from disconnected to connected, the first control component 103 controls the power pump 102 to be enabled. After it is detected that connection statuses of the third connection port 2011 and the fourth connection port 2012 are both switched from disconnected to connected, when it is detected that the temperature of the heat exchange requirement component is the target temperature, the second control component 203 may send the heat exchange stop request to the first control component 103 through the established communication connection. The target temperature may be an optimal working temperature of each heat exchange requirement component. Certainly, communication may also be performed herein through a communication signal cable. Details are not described herein again. The first control component 103 is further configured to: when receiving the heat exchange stop request, control the power pump 102 to be disabled, and send the disconnection request. The mechanical arm may disconnect the first port 1011, the second connection port 1012, the third connection port 2011, and the fourth connection port 2012.

In a possible implementation, the heat storage device may be deployed in a movable charging vehicle, and the heat exchange requirement component belongs to the movable charging vehicle.

In the solution of this embodiment of this application, when charging is required, an electric vehicle may send a charging request to a management end. After receiving the charging request, the management end selects, based on position information of the electric vehicle carried in the charging request, a movable charging vehicle closest to the electric vehicle, and forwards the charging request to the movable charging vehicle.

The second control component 203 in the movable charging vehicle receives the charging request sent by the electric vehicle, obtains the position information and charging requirement information that are of the electric vehicle and that are carried in the charging request, and calculates, based on the charging requirement information, an estimated temperature of the heat exchange requirement component after discharging ends. The charging requirement information carried in the charging request may include at least one of required power and required charging time. If the estimated temperature of the heat exchange requirement component is not higher than an upper limit of a normal working temperature, the second control component controls the movable charging vehicle to travel to a position corresponding to the position information to perform charging processing. An equation for calculating the estimated temperature $T_{需终}$ of the heat exchange requirement component may be as follows:

$$\begin{cases} \sum_{i=1}^{n}[P_i \cdot (1-\eta_i)] + \cdot t_{\text{放}} = \sum_{i=1}^{n}[C_i \cdot M_i \cdot (T_{\text{需终}} - T_i)] + C_{\text{液}} \cdot M_{\text{液}} \cdot (T_{\text{液终}} - T_{\text{液}}) \\ T_{\text{液终}} - T_{\text{需终}} = \varDelta T_1 \end{cases}$$

n is a quantity of heat exchange requirement components, $P_i$ is power of an ith heat exchange requirement component, $\eta_i$ is efficiency of the power of the ith heat exchange requirement component, $C_i$ is a specific heat capacity of the ith heat exchange requirement component, $M_i$ is mass of the ith heat exchange requirement component, $T_{\text{需终}}$ is the estimated temperature of the heat exchange requirement component when the discharging ends. It is assumed herein that temperatures of the heat exchange requirement components are the same. $T_i$ is a current temperature of the ith heat exchange requirement component, $C_{\text{液}}$ is a specific heat capacity of the heat exchange liquid in the heat storage device 20, $M_{\text{液}}$ is mass of the heat exchange liquid in the heat storage device 20, $T_{\text{液终}}$ is an estimated temperature of the heat exchange liquid in the heat storage device 20 when discharging ends, $T_i$ is a current temperature of the heat exchange liquid in the heat storage device 20, $\varDelta T_1$ is a constant, and $t_{\text{放}}$ is required charging time. If the charging requirement information does not include the required charging time, the required charging time may be calculated by using charged electricity and the power of the heat exchange requirement component.

In a possible implementation, the electric vehicle may further reserve charging time, that is, the charging request further carries a required charging start moment of the electric vehicle.

In the solution of this embodiment of this application, if the calculated estimated temperature of the heat exchange requirement component is higher than the upper limit of the normal working temperature, the second control component 203 can calculate, based on the required charging time and heat exchange power of the heat exchange device 10 in a case in which the temperature of the heat exchange requirement component is the upper limit of the normal working temperature when discharging ends, an estimated initial temperature required for heat exchange liquid stored in the heat exchange pipe 202 and estimated heat exchange duration required for adjusting a temperature of the heat exchange liquid stored in the heat exchange pipe 202 to the estimated initial temperature. Equations for calculating the estimated initial temperature $T_{\text{液初}}$ and the estimated heat exchange duration $t_{\text{换}}$ required by the heat exchange liquid may be as follows:

$$\begin{cases} \sum_{i=1}^{n}[P_i \cdot (1-\eta_i)] + \cdot t_{\text{放}} = \sum_{i=1}^{n}[C_i \cdot M_i \cdot (T_{\text{需设}} - T_i)] + C_{\text{液}} \cdot M_{\text{液}} \cdot (T_{\text{液设}} - T_{\text{液初}}) \\ T_{\text{液设}} - T_{\text{需设}} = \varDelta T_2 \\ P_{\text{换}} \cdot t_{\text{换}} = C_{\text{液}} \cdot M_{\text{液}} \cdot (T_{\text{液}} - T_{\text{液初}}) \end{cases}$$

$P_{\text{换}}$ is a constant specified for the power of the heat exchange device 10, $\varDelta T_2$ is a constant, $T_{\text{液初}}$ is the estimated initial temperature required for the heat exchange liquid stored in the heat exchange pipe 202 when the temperature of the heat exchange requirement component is the upper limit of the normal working temperature when discharging ends, $t_{\text{换}}$ is the estimated heat exchange duration required for adjusting the temperature of the heat exchange liquid stored in the heat exchange pipe 202 to the estimated initial temperature, $T_{\text{需设}}$ is the upper limit of the normal working temperature of the heat exchange requirement component, $T_{\text{液设}}$ is the upper limit of the normal working temperature of the heat exchange liquid in the heat storage device 20 when discharging ends.

Then, the second control component 203 calculates, based on the position information of the electric vehicle, estimated travel duration in which the movable charging vehicle travels to the electric vehicle, and calculates a time difference between a current moment and the required charging start moment.

If a sum of the estimated heat exchange duration and the estimated travel duration is not greater than the time difference, the second control component 203 controls the movable charging vehicle to travel to a target heat exchange position, and sends a heat exchange connection request. The heat exchange connection request may be sent to a management platform, and the management platform may prompt a worker to perform a heat exchange connection.

The worker may connect the third connection port 2011 and the fourth connection port 2012 in the heat storage device 20 on the movable charging vehicle to the first connection port 1011 and the second connection port 1012 in the heat exchange device 10.

When it is detected that the connection statuses of the first connection port 1011 and the second connection port 1012 are switched from disconnected to connected, the first control component 103 controls the power pump 102 to be enabled to perform heat exchange.

After it is detected that the connection statuses of the third connection port 2011 and the fourth connection port 2012 are both switched from disconnected to connected, when it is detected that the temperature of the heat exchange liquid stored in the heat exchange pipe 202 reaches the estimated initial temperature, the second control component sends the heat exchange stop request to the first control component 103, and sends the heat exchange disconnection request. The heat exchange connection request may also be sent to the management platform, and the management platform may prompt the worker to disconnect the heat exchange connection. The worker may disconnect the third connection port 2011 and the fourth connection port 2012 in the heat storage device 20 on the movable charging vehicle from the first connection port 1011 and the second connection port 1012 in the heat exchange device 10.

When it is detected that the connection statuses of the first connection port 1011 and the second connection port 1012 are switched from disconnected to connected, the first control component 103 controls the power pump 102 to be enabled; and when receiving the heat exchange stop request, controls the power pump 102 to be disabled.

When it is detected that the connection statuses of the third connection port (2011) and the fourth connection port 2012 are both switched from connected to disconnected, the second control component 203 controls the movable charging vehicle to travel to the position corresponding to the position information of the electric vehicle.

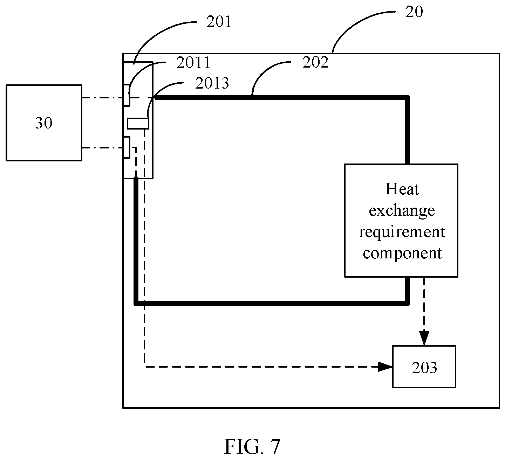

If the sum of the estimated heat exchange duration and the estimated travel duration is greater than the time difference, the second control component 203 sends an external liquid storage component connection request. A heat exchange management system herein may further include an external liquid storage component 30, and the external liquid storage component 30 stores heat exchange liquid of an appropriate temperature, for example, a heat exchange liquid of 30 degrees Celsius. As shown in FIG. 7, a first port and a second port of the external liquid storage component 30 are configured to connect respectively to the third connection port 2011 and the fourth connection port 2012 that are in the heat storage device 20. In addition, to ensure that the external liquid storage component is connected to the heat storage device 20, the first port and the second port of the liquid storage component 30 may be the same as the first connection port 1011 and the second connection port 1012 in the heat exchange device 10.

The external liquid storage component connection request may also be sent to the management platform, and the management platform may prompt the worker to perform connection processing on the external liquid storage component. The worker may enable the first port and the second port of the external liquid storage component 30 to connect respectively to the third connection port 2011 and the fourth connection port 2012 that are in the heat storage device 20. Then, when it is detected that the connection statuses of the third connection port 2011 and the fourth connection port 2012 are both switched from disconnected to connected, the second control component 203 controls the movable charging vehicle to travel to the position corresponding to the position information of the electric vehicle, and performs charging processing on the electric vehicle.

In addition, when the sum of the estimated heat exchange duration and the estimated travel duration is greater than the time difference, mass $M_{外}$ of the heat exchange liquid in the external liquid storage component that needs to be carried may be calculated. An equation for calculating the mass $M_{外}$ of the heat exchange liquid in the external liquid storage component may be as follows:

$$\begin{cases} \sum_{i=1}^{n}[P_i \cdot (1-\eta_i)] \cdot t = \sum_{i=1}^{n}[C_i \cdot M_i \cdot (T_{需设} - T_i)] + C_{液} \cdot M_{液} \cdot (T_{液设} - T_{液}) \\ + C_{液} \cdot M_{外} \cdot (T_{液设} - T_{外}) \\ T_{液设} - T_{需设} = \Delta T_2 \end{cases}$$

$M_{外}$ is the mass of the heat exchange liquid in the external liquid storage component that needs to be carried, and $T_{外}$ is a temperature of the heat exchange liquid stored in the external liquid storage component 30, and the value is a constant.

Correspondingly, the external liquid storage component connection request may carry the mass of the heat exchange liquid in the external liquid storage component, and the worker may select an external liquid storage component that stores the mass $M_{\text{外}}$ to connect to the heat storage device 20.

In still another possible implementation, the heat exchange liquid in the heat storage device 20 may be kept above the lower limit of the normal working temperature, for example, kept above 15 degrees Celsius. When the temperature of the heat exchange liquid is lower than the lower limit of the normal working temperature, heat exchange may be performed with the heat exchange device 10. In this way, it can be ensured that the heat exchange requirement component can be in the normal working temperature in cold weather, so as to provide a more efficient charging service.

In still another possible implementation, the heat exchange device 10 may include a plurality of first connection components, and each connection component corresponds to one power pump. After one heat storage device is connected to a connection port of one first connection component, the first control component 103 may enable a corresponding power pump to perform a heat exchange task. In this way, one heat exchange device 10 may perform heat exchange on a plurality of heat storage devices at the same time, thereby improving heat exchange efficiency.

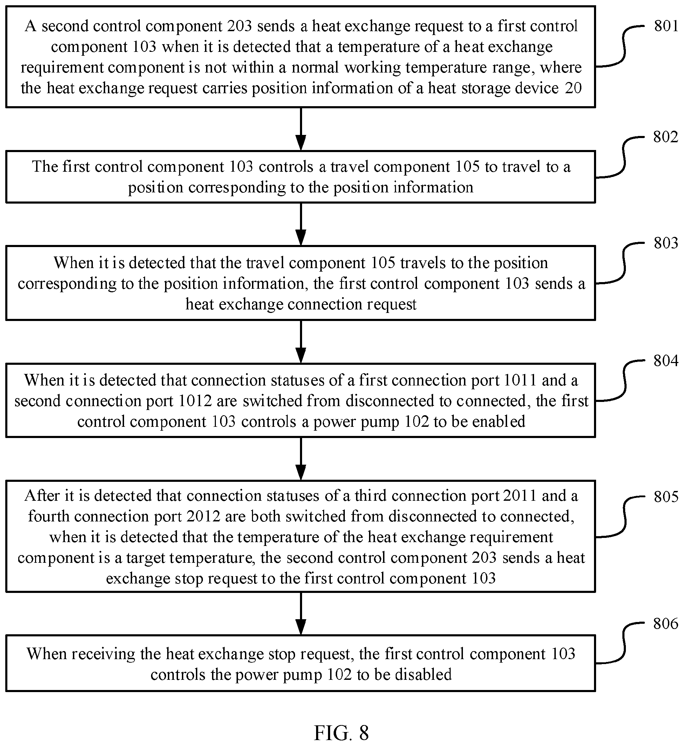

An embodiment of this application further provides a heat management method. The heat management method may be applied to the heat management system in which the heat exchange device 10 includes the travel component 105 and the heat storage device 20 includes a second control component 203. Refer to FIG. 8. A procedure of the heat management method may include the following steps:

Step 801: The second control component 203 sends a heat exchange request to a first control component 103 when it is detected that a temperature of a heat exchange requirement component is not within a normal working temperature range.

The heat exchange request carries position information of the heat storage device 20.

Step 802: The first control component 103 controls the travel component 105 to travel to a position corresponding to the position information.

Step 803: When it is detected that the travel component 105 travels to the position corresponding to the position information, the first control component 103 sends a heat exchange connection request.

Step 804: When it is detected that connection statuses of a first connection port 1011 and a second connection port 1012 are switched from disconnected to connected, the first control component 103 controls a power pump 102 to be enabled.

Step 805: After it is detected that connection statuses of a third connection port 2011 and a fourth connection port 2012 are both switched from disconnected to connected, when it is detected that the temperature of the heat exchange requirement component is a target temperature, the second control component 203 sends a heat exchange stop request to the first control component 103.

Step 806: When receiving the heat exchange stop request, the first control component 103 controls the power pump 102 to be disabled.

It should be noted that, operations performed by the first control component 103 and the second control component 203 in the foregoing step 801 to step 805 are the same as operations performed by the first control component 103 and the second control component 203 when the heat exchange device 10 in the embodiment of the heat management system has the travel component. Details are not described herein again.

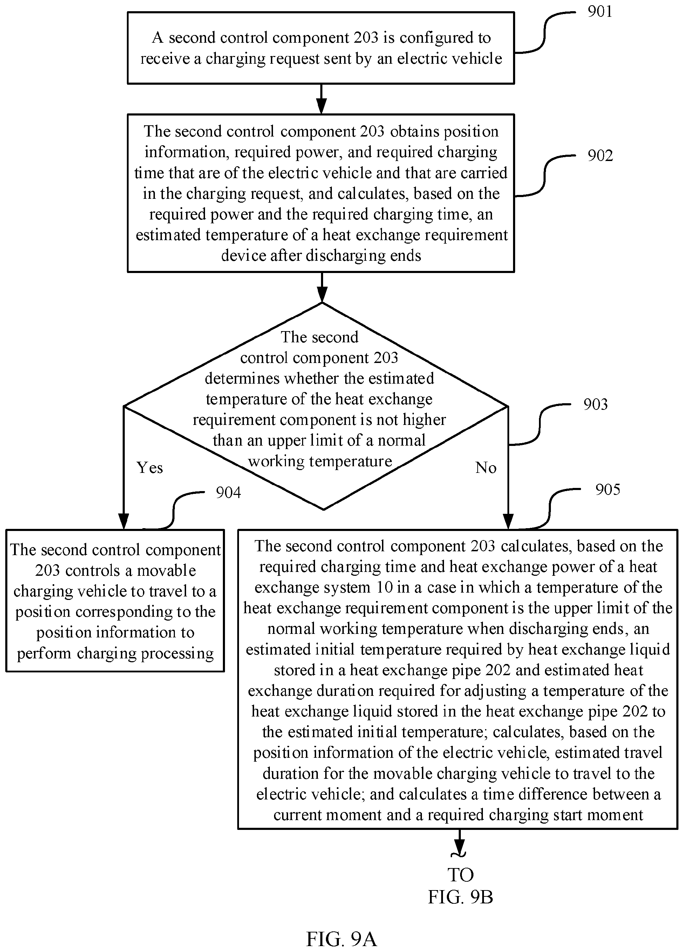

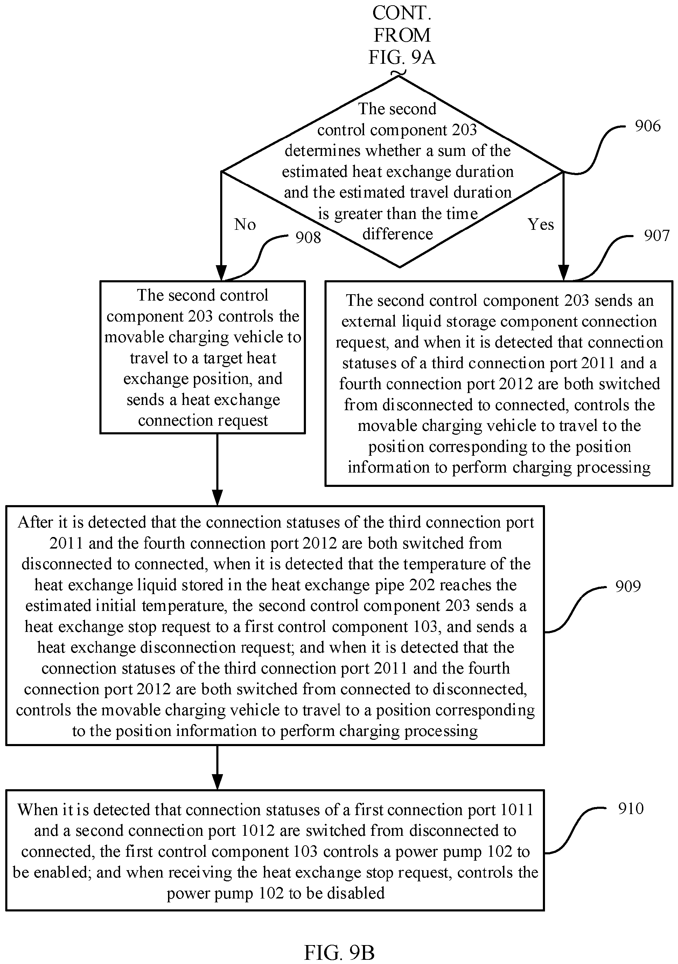

An embodiment of this application further provides still another heat management method. The heat management method may be applied to a heat management system in which the heat storage device 20 includes the second control component 203, and the heat storage device 20 is deployed in a movable charging vehicle. Refer to FIG. 9A and FIG. 9B, a procedure of the heat management method may include the following steps:

Step 901: The second control component 203 receives a charging request sent by an electric vehicle.

Step 902: The second control component 203 obtains position information, required power, and required charging time that are of the electric vehicle and that are carried in the charging request, and calculates, based on the required power and the required charging time, an estimated temperature of a heat exchange requirement component after discharging ends.

Step 903: The second control component 203 determines whether the estimated temperature of the heat exchange requirement component is higher than an upper limit of a normal working temperature.

Step 904: If determining that the estimated temperature of the heat exchange requirement component is not higher than the upper limit of the normal working temperature, the second control component 203 controls the movable charging vehicle to travel to a position corresponding to the position information to perform charging processing.

Step 905: if determining that the estimated temperature of the heat exchange requirement component is higher than the upper limit of the normal working temperature, the second control component 203 calculates, based on the required charging time and heat exchange power of the heat exchange device 10 in a case in which a temperature of the heat exchange requirement component is the upper limit of the normal working temperature when discharging ends, an estimated initial temperature required by heat exchange liquid stored in a heat exchange pipe 202 and estimated heat exchange duration required for adjusting a temperature of the heat exchange liquid stored in the heat exchange pipe 202 to the estimated initial temperature; calculates, based on the position information of the electric vehicle, estimated travel duration for the movable charging vehicle to travel to the electric vehicle; and calculates a time difference between a current moment and a required charging start moment.

Step 906: The second control component 203 determines whether a sum of the estimated heat exchange duration and the estimated travel duration is greater than the time difference.

Step 907: If determining that the sum of the estimated heat exchange duration and the estimated travel duration is greater than the time difference, the second control component 203 sends an external liquid storage component connection request, and when it is detected that connection statuses of a third connection port 2011 and a fourth connection port 2012 are both switched from disconnected to connected, controls the movable charging vehicle to travel to the position corresponding to the position information to perform charging processing.

Step 908: If determining that the sum of the estimated heat exchange duration and the estimated travel duration is not greater than the time difference, the second control component 203 controls the movable charging vehicle to travel to a target heat exchange position, and sends a heat exchange connection request.

Step 909: After it is detected that the connection statuses of the third connection port 2011 and the fourth connection port 2012 are both switched from disconnected to connected, when it is detected that the temperature of the heat exchange liquid stored in the heat exchange pipe 202 reaches the estimated initial temperature, the second control component 203 sends a heat exchange stop request to the first control component 103, and sends a heat exchange disconnection request; and when it is detected that the connection statuses of the third connection port 2011 and the fourth connection port 2012 are both switched from connected to disconnected, controls the movable charging vehicle to travel to a position corresponding to the position information to perform charging processing.

Step 910: When it is detected that connection statuses of a first connection port 1011 and a second connection port 1012 are switched from disconnected to connected, a first control component 103 controls a power pump 102 to be enabled; and when receiving the heat exchange stop request, controls the power pump 102 to be disabled.

It should be noted that, operations performed by the first control component 103 and the second control component 203 in the foregoing step 901 to step 910 are the same as operations performed by the first control component 103 and the second control component 203 when the heat storage device 20 in the embodiment of the heat management system is deployed on the movable charging vehicle. Details are not described herein again.

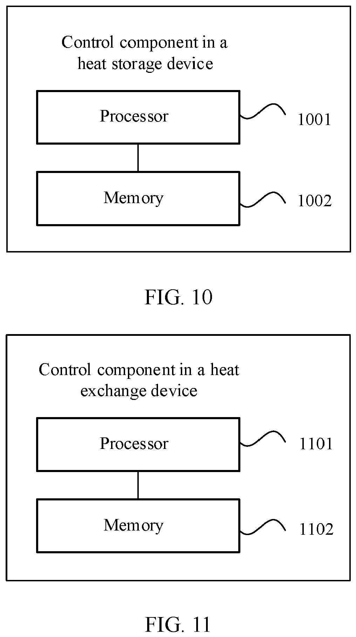

FIG. 10 is a schematic diagram of a structure of a control component in a heat storage device according to an embodiment of this application. The control component in the heat storage device may be the second control component in the foregoing heat storage device. The control component in the heat storage device may vary greatly due to different configurations or performance, and may include one or more processors (central processing units, CPU) 1001 and one or more memories 1002. The memory 1002 stores at least one instruction, and the at least one instruction is loaded and executed by the processor 1001 to implement the control method for the heat storage device.

FIG. 11 is a schematic diagram of a structure of a control component in a heat exchange device according to an embodiment of this application. The control component in the heat exchange device may be the first control component in the foregoing heat exchange device. The control component in the heat exchange device may vary greatly due to different configurations or performance, and may include one or more processors (central processing units, CPU) 1101 and one or more memories 1102. The memory 1102 stores at least one instruction, and the at least one instruction is loaded and executed by the processor 1101 to implement the control method for the heat exchange device.

The foregoing descriptions are merely example embodiments of this application, but are not intended to limit this application. Any modification, equivalent replacement, or improvement made without departing from the spirit and principle of this application should fall within the protection scope of this application.

**Claims**

1. A heat storage device, wherein the heat storage device comprises a second connection component (201) and a heat exchange pipe (202);

   the second connection component (201) comprises a third connection port (2011) and a fourth connection port (2012), and the third connection port (2011) and the fourth connection port (2012) are configured to connect respectively to a first connection port (1011) and a second connection port (1012) that are comprised in a first connection component (101) in a heat exchange device;
   two ports of the heat exchange pipe (202) are connected to the third connection port (2011) and the fourth connection port (2012) respectively, the second connection port (1012) is connected to a first port of a power pump (102) in the heat exchange device, the first connection port (1011) is connected to a first port of a liquid storage component (104) in the heat exchange device, and a second port of the liquid storage component (104) is connected to a second port of the power pump (102); and
   the heat exchange pipe (202) is configured to store heat exchange liquid, and the heat exchange liquid stored in the heat exchange pipe (202) is used to perform heat exchange with a heat exchange requirement component.

2. The heat storage device according to claim 1, wherein the heat storage device further comprises a second control component (203); and
the second control component (203) is configured to send a heat exchange request to a first control component (103) in the heat exchange device when it is detected that a temperature of the heat exchange requirement component is not within a normal working temperature range, wherein the heat exchange request carries position information of the heat storage device (20).

3. The heat storage device according to claim 2, wherein the second control component (203) is further configured to: after it is detected that connection statuses of the third connection port (2011) and the fourth connection port (2012) are both switched from disconnected to connected, and when it is detected that the temperature of the heat exchange requirement component is a first temperature, send a heat exchange stop request to the first control component (103).

4. The heat storage device according to claim 1, wherein the heat storage device is deployed in a movable charging vehicle, the heat exchange requirement component belongs to the movable charging vehicle, and the heat storage device further comprises a second control component (203); and
the second control component (203) is configured to: receive a charging request sent by an electric vehicle; obtain position information and charging requirement information of the electric vehicle that are carried in the charging request, wherein the charging requirement information comprises at least one of required power and required charging time; calculate, based on the charging requirement information, an estimated temperature of the heat exchange requirement component after discharging ends; and if the estimated temperature of the heat exchange requirement component is not higher than an upper limit of a normal working temperature, control the movable charging vehicle to travel to a position corresponding to the position information to perform charging processing.

5. The heat storage device according to claim 4, wherein the charging request further carries a required charging start moment of the electric vehicle; and
the second control component (203) is further configured to: if the estimated temperature of the heat exchange requirement component is higher than the upper limit of the normal working temperature, calculate, based on the charging requirement information and heat exchange power of the heat exchange device in a case in which a temperature of the heat exchange requirement component is the upper limit of the normal working temperature when discharging ends, an estimated initial temperature required by the heat exchange liquid stored in the heat exchange pipe (202) and estimated heat exchange duration required for adjusting a temperature of the heat exchange liquid stored in the heat exchange pipe (202) to the estimated initial temperature; calculate, based on the position information of the electric vehicle, estimated travel duration for the movable charging vehicle to travel to the electric vehicle; calculate a time difference between a current moment and the required charging start moment; if a sum of the estimated heat exchange duration and the estimated travel duration is greater than the time difference, send an external liquid storage component connection request, wherein the external liquid storage component connection request is used to request to connect to an external liquid storage component (30), a first port and a second port of the external liquid storage component (30) are configured to connect to the third connection port (2011) and the fourth connection port (2012) respectively, and the external liquid storage component (30) is configured to store heat exchange liquid; and when it is detected that connection statuses of the third connection port (2011) and the fourth connection port (2012) are both switched from disconnected to connected, control the movable charging vehicle to travel to the position corresponding to the position information to perform charging processing.

6. The heat storage device according to claim 5, wherein the second control component (203) is further configured to: if the sum of the estimated heat exchange duration and the estimated travel duration is not greater than the time difference, control the movable charging vehicle to travel to a target heat exchange position, and send a heat exchange connection request; after it is detected that the connection statuses of the third connection port (2011) and the fourth connection port (2012) are both switched from disconnected to connected, when it is detected that the temperature of the heat exchange liquid stored in the heat exchange pipe (202) reaches the estimated initial temperature, send a heat exchange stop request to a first control component (103), and send a heat exchange disconnection request; and when it is detected that the connection statuses of the third connection port (2011) and the fourth connection port (2012) are both switched from connected to disconnected, control the movable charging vehicle to travel to the position corresponding to the position information to perform charging processing.

7. The heat storage device according to claim 5 or 6, wherein the second connection component (201) further comprises a second connection detection circuit (2013), and the second connection detection circuit (2013) is configured to

detect the connection statuses of the third connection port (2011) and the fourth connection port (2012), and send the connection statuses of the third connection port (2011) and the fourth connection port (2012) to the second control component (203).

8.  A heat exchange device, wherein the heat exchange device comprises a first connection component (101), a power pump (102), a first control component (103) and a liquid storage component (104);

    the first connection component (101) comprises a first connection port (1011) and a second connection port (1012), and the first connection port (1011) and the second connection port (1012) are configured to connect respectively to a third connection port (2011) and a fourth connection port (2012) that are comprised in a second connection component (201) in a heat storage device;
    the first connection port (1011) is connected to a first port of the liquid storage component (104), the first connection port (1012) is connected to a first port of the power pump (102), two ports of a heat exchange pipe (202) in the heat storage device are connected to the third connection port (2011) and the fourth connection port (2012) respectively, the liquid storage component (104) is configured to store heat storage liquid, the heat exchange pipe (202) is configured to store heat exchange liquid, and the heat exchange liquid stored in the heat exchange pipe (202) is used to perform heat exchange with a heat exchange requirement component; and
    the first control component (103) is configured to control the power pump (102) to be enabled or disabled.

9.  The heat exchange device according to claim 8, wherein the heat exchange device (10) further comprises a travel component (105);

    the first connection component (101), the first control component (103), the liquid storage component (104), and the power pump (102) are disposed on the travel component (105); and
    the first control component (103) is configured to: receive a heat exchange request sent by a second control component (203) in the heat storage device when it is detected that a temperature of the heat exchange requirement component is not within a normal working temperature range, and control the travel component (105) to travel to a position corresponding to position information of the heat storage device carried in the heat exchange request.

10. The heat exchange device according to claim 9, wherein the first control component (103) is further configured to: send a heat exchange connection request when it is detected that the travel component (105) travels to the position corresponding to the position information, and when it is detected that connection statuses of the first connection port (1011) and the second connection port (1012) are switched from disconnected to connected, control the power pump (102) to be enabled; and
    the first control component (103) is further configured to: when receiving a heat exchange stop request sent by the second control component (203), control the power pump (102) to be disabled.

11. The heat exchange device according to claim 10, wherein the first connection component (101) further comprises a first connection detection circuit (1013), wherein the first connection detection circuit (1013) is configured to: detect the connection statuses of the first connection port (1011) and the second connection port (1012); and send the connection statuses of the first connection port (1011) and the second connection port (1012) to the first control component (103).

12. The heat exchange device according to claims 8 to 11, wherein the heat exchange device further comprises a temperature adjustment component (106); and
    the temperature adjustment component (106) is configured to adjust a temperature of the heat exchange liquid in the liquid storage component (104) to a target temperature range.

13. The heat exchange device according to claim 12, wherein a first port and a second port of the temperature adjustment component (106) are connected to a third port of the liquid storage component (104) and a third port of the power pump (102) respectively; and
    the first control component (103) is configured to: when it is detected that the temperature of the heat exchange liquid in the liquid storage component (104) is higher than an upper limit of the target temperature range, control the temperature adjustment component (106) to start a cooling mode, and control the power pump (102) to be enabled, so that the heat exchange liquid in the liquid storage component (104) circulates in the liquid storage component (104), the power pump (102), and the temperature adjustment component (106); and when it is detected that the temperature of the heat exchange liquid in the liquid storage component (104) is within the target temperature range, control the temperature adjustment component (106) and the power pump (102) to be disabled.

14. The heat exchange device according to claim 13, wherein the first control component (103) is further configured to: when it is detected that the temperature of the heat exchange liquid in the liquid storage component (104) is lower than a lower limit of the target temperature range, control the temperature adjustment component (106) to start a heating mode, and control the power pump (102) to be enabled, so that the heat exchange liquid in the liquid storage component (104) circulates in the liquid storage component (104), the power pump (102), and the temperature adjustment component (106); and when it is detected that the temperature of the heat exchange liquid in the liquid storage component (104) is within the target temperature range, control the temperature adjustment component (106) and the power pump (102) to be disabled.

15. A control method for a heat storage device, wherein the control method is applied to the heat storage device according to claim 1, the heat storage device further comprises a second control component (203), and the control method comprises:

receiving, by the second control component (203), a charging request sent by an electric vehicle, wherein the charging request carries position information and charging requirement information of the electric vehicle, and the charging requirement information comprises at least one of required power and required charging time; and calculating, by the second control component (203) based on the charging requirement information, an estimated temperature of the heat exchange requirement component after discharging ends, and if the estimated temperature of the heat exchange requirement component is not higher than an upper limit of a normal working temperature, controlling a movable charging vehicle to travel to a position corresponding to the position information to perform charging processing.

16. The control method according to claim 15, wherein the charging request further carries a required charging start moment of the electric vehicle, and the control method further comprises:

if the estimated temperature of the heat exchange requirement component is higher than the upper limit of the normal working temperature, calculating, by the second control component (203) based on the charging requirement information and heat exchange power of the heat exchange device in a case in which the temperature of the heat exchange requirement component is the upper limit of the normal working temperature when discharging ends, an estimated initial temperature required for heat exchange liquid stored in the heat exchange pipe (202) and estimated heat exchange duration required for adjusting a temperature of the heat exchange liquid stored in the heat exchange pipe (202) to the estimated initial temperature; calculating, by the second control component (203) based on the position information of the electric vehicle, estimated travel duration in which the movable charging vehicle travels to the electric vehicle, and calculating a time difference between a current moment and the required charging start moment; and if a sum of the estimated heat exchange duration and the estimated travel duration is greater than the time difference, sending, by the second control component (203), an external liquid storage component connection request, and when it is detected that connection statuses of the third connection port (2011) and the fourth connection port (2012) are both switched from disconnected to connected, controlling the movable charging vehicle to travel to the position corresponding to the position information to perform charging processing.

17. The control method according to claim 15 or 16, wherein the control method further comprises:

if the sum of the estimated heat exchange duration and the estimated travel duration is not greater than the time difference, controlling, by the second control component (203), the movable charging vehicle to travel to a target heat exchange position, and sending a heat exchange connection request; after it is detected that the connection statuses of the third connection port (2011) and the fourth connection port (2012) are both switched from disconnected to connected, when it is detected that the temperature of the heat exchange liquid stored in the heat exchange pipe (202) reaches the estimated initial temperature, sending, by the second control component (203), a heat exchange stop request to a first control component (103) in a heat exchange device, and sending a heat exchange disconnection request; and when it is detected that the connection statuses of the third connection port (2011) and the fourth connection port (2012) are both switched from connected to disconnected, controlling, by the second control component (203), the movable charging vehicle to travel to the position corresponding to the position information to perform charging processing.

**18.** A control method for a heat exchange system, wherein the control method is applied to the heat exchange device according to claim 8, the heat exchange device further comprises a travel component (105), and the control method comprises:

receiving, by a first control component (103), a heat exchange request sent by a heat storage device, wherein the heat exchange request carries position information of the heat storage device;
controlling, by the first control component (103), the travel component (105) to travel to a position corresponding to the position information;
sending, by the first control component (103), a heat exchange connection request when it is detected that the travel component (105) travels to the position corresponding to the position information, and when it is detected that connection statuses of a first connection port (1011) and a second connection port (1012) are switched from disconnected to connected, controlling the power pump (102) to be enabled; and
when receiving a heat exchange stop request sent by a second control component (203), controlling, by the first control component (103), the power pump (102) to be disabled.

**19.** The control method according to claim 18, wherein the control method further comprises:

when it is detected that a temperature of heat exchange liquid in the liquid storage component (104) is higher than an upper limit of a target temperature range, controlling, by the first control component (103), the temperature adjustment component (106) to start a cooling mode, and controlling the power pump (102) to be enabled, so that the heat exchange liquid in the liquid storage component (104) circulates in the liquid storage component (104), the power pump (102), and the temperature adjustment component (106); and
when it is detected that the temperature of the heat exchange liquid in the liquid storage component (104) is within the target temperature range, controlling, by the first control component (103), the temperature adjustment component (106) and the power pump (102) to be disabled.

**20.** The control method according to claim 19, wherein the control method further comprises:

when it is detected that the temperature of the heat exchange liquid in the liquid storage component (104) is lower than a lower limit of the target temperature range, controlling, by the first control component (103), the temperature adjustment component (106) to start a heating mode, and controlling the power pump (102) to be enabled, so that the heat exchange liquid in the liquid storage component (104) circulates in the liquid storage component (104), the power pump (102), and the temperature adjustment component (106); and
when it is detected that the temperature of the heat exchange liquid in the liquid storage component (104) is within the target temperature range, controlling, by the first control component (103), the temperature adjustment component (106) and the power pump (102) to be disabled.

**21.** A heat management system, wherein the heat management system comprises the heat storage device according to claims 1 to 7 and the heat exchange device according to claims 8 to 11.

**22.** A control component in a heat storage device, wherein the control component comprises a processor and a memory, the memory stores at least one instruction, and the instruction is loaded and executed by the processor to implement an operation performed by the control method according to any one of claims 15 to 17.

**23.** A control component in a heat exchange device, wherein the control component comprises a processor and a memory, the memory stores at least one instruction, and the instruction is loaded and executed by the processor to implement an operation performed by the control method according to any one of claims 18 to 20.

FIG. 1

FIG. 2

FIG. 3

FIG. 4

FIG. 5

FIG. 6

FIG. 7

A second control component 203 sends a heat exchange request to a first control component 103 when it is detected that a temperature of a heat exchange requirement component is not within a normal working temperature range, where the heat exchange request carries position information of a heat storage device 20 ⟶ 801

The first control component 103 controls a travel component 105 to travel to a position corresponding to the position information ⟶ 802

When it is detected that the travel component 105 travels to the position corresponding to the position information, the first control component 103 sends a heat exchange connection request ⟶ 803

When it is detected that connection statuses of a first connection port 1011 and a second connection port 1012 are switched from disconnected to connected, the first control component 103 controls a power pump 102 to be enabled ⟶ 804

After it is detected that connection statuses of a third connection port 2011 and a fourth connection port 2012 are both switched from disconnected to connected, when it is detected that the temperature of the heat exchange requirement component is a target temperature, the second control component 203 sends a heat exchange stop request to the first control component 103 ⟶ 805

When receiving the heat exchange stop request, the first control component 103 controls the power pump 102 to be disabled ⟶ 806

FIG. 8

A second control component 203 is configured to receive a charging request sent by an electric vehicle — 901

The second control component 203 obtains position information, required power, and required charging time that are of the electric vehicle and that are carried in the charging request, and calculates, based on the required power and the required charging time, an estimated temperature of a heat exchange requirement device after discharging ends — 902

The second control component 203 determines whether the estimated temperature of the heat exchange requirement component is not higher than an upper limit of a normal working temperature — 903

Yes — 904

No — 905

The second control component 203 controls a movable charging vehicle to travel to a position corresponding to the position information to perform charging processing

The second control component 203 calculates, based on the required charging time and heat exchange power of a heat exchange system 10 in a case in which a temperature of the heat exchange requirement component is the upper limit of the normal working temperature when discharging ends, an estimated initial temperature required by heat exchange liquid stored in a heat exchange pipe 202 and estimated heat exchange duration required for adjusting a temperature of the heat exchange liquid stored in the heat exchange pipe 202 to the estimated initial temperature; calculates, based on the position information of the electric vehicle, estimated travel duration for the movable charging vehicle to travel to the electric vehicle; and calculates a time difference between a current moment and a required charging start moment

TO
FIG. 9B

FIG. 9A

CONT.
FROM
FIG. 9A

The second control component 203 determines whether a sum of the estimated heat exchange duration and the estimated travel duration is greater than the time difference — 906

No — 908    Yes — 907

The second control component 203 controls the movable charging vehicle to travel to a target heat exchange position, and sends a heat exchange connection request

The second control component 203 sends an external liquid storage component connection request, and when it is detected that connection statuses of a third connection port 2011 and a fourth connection port 2012 are both switched from disconnected to connected, controls the movable charging vehicle to travel to the position corresponding to the position information to perform charging processing

After it is detected that the connection statuses of the third connection port 2011 and the fourth connection port 2012 are both switched from disconnected to connected, when it is detected that the temperature of the heat exchange liquid stored in the heat exchange pipe 202 reaches the estimated initial temperature, the second control component 203 sends a heat exchange stop request to a first control component 103, and sends a heat exchange disconnection request; and when it is detected that the connection statuses of the third connection port 2011 and the fourth connection port 2012 are both switched from connected to disconnected, controls the movable charging vehicle to travel to a position corresponding to the position information to perform charging processing — 909

When it is detected that connection statuses of a first connection port 1011 and a second connection port 1012 are switched from disconnected to connected, the first control component 103 controls a power pump 102 to be enabled; and when receiving the heat exchange stop request, controls the power pump 102 to be disabled — 910

FIG. 9B

Control component in a
heat storage device

Processor                 1001

Memory                    1002

FIG. 10

Control component in a heat
exchange device

Processor                 1101

Memory                    1102

FIG. 11

## INTERNATIONAL SEARCH REPORT

| International application No. |
| --- |
| **PCT/CN2020/110106** |

**A.  CLASSIFICATION OF SUBJECT MATTER**

F28D 20/02(2006.01)i

According to International Patent Classification (IPC) or to both national classification and IPC

**B.  FIELDS SEARCHED**

Minimum documentation searched (classification system followed by classification symbols)

F28D; H01M 10

Documentation searched other than minimum documentation to the extent that such documents are included in the fields searched

Electronic data base consulted during the international search (name of data base and, where practicable, search terms used)

CNABS, VEN, CNKI: 热交换, 蓄热, 蓄能, 储能, 储热, 连接端口, 换热, 储液, 散热, 连接, 调温, 移动, 充电, 汽车, 车辆, heat exchange, heat storage, connection, port, temperature, charge, mobile, car, vehicle, liquid storage

**C.  DOCUMENTS CONSIDERED TO BE RELEVANT**

| Category* | Citation of document, with indication, where appropriate, of the relevant passages | Relevant to claim No. |
| --- | --- | --- |
| X | CN 201191052 Y (HANGZHOU RUIFENG ELECTRONIC CONTROL TECHNOLOGY CO., LTD.) 04 February 2009 (2009-02-04)<br>  description page 3 line 5- page 4 line 3, figures 1 and 2 | 1, 8, 21 |
| A | CN 210000201 U (JIZHONG ENERGY JINGXING MINING GROUP CO., LTD.) 31 January 2020 (2020-01-31)<br>  entire document | 1-23 |
| A | CN 109974064 A (NANJING JINHE ENERGY MATERIAL CO., LTD.) 05 July 2019 (2019-07-05)<br>  entire document | 1-23 |
| A | CN 106165192 A (PHINERGY LTD.) 23 November 2016 (2016-11-23)<br>  entire document | 1-23 |
| A | JP 05124443 A (TOHOKU ELECTRIC POWER CO.) 21 May 1993 (1993-05-21)<br>  entire document | 1-23 |
| A | DE 102009024497 A1 (TRIESCH FRANK) 09 December 2010 (2010-12-09)<br>  entire document | 1-23 |

☑ Further documents are listed in the continuation of Box C.      ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **29 April 2021** | **11 May 2021** |

| Name and mailing address of the ISA/CN | Authorized officer |
| --- | --- |
| **China National Intellectual Property Administration (ISA/ CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**EP 4 187 187 A1**

| | INTERNATIONAL SEARCH REPORT | International application No. |
|---|---|---|
| | | **PCT/CN2020/110106** |

**C.    DOCUMENTS CONSIDERED TO BE RELEVANT**

| Category* | Citation of document, with indication, where appropriate, of the relevant passages | Relevant to claim No. |
|---|---|---|
| A | CN 107128153 A (UNIVERSITY OF SHANGHAI FOR SCIENCE AND TECHNOLOGY) 05 September 2017 (2017-09-05)<br>entire document | 1-23 |

Form PCT/ISA/210 (second sheet) (January 2015)

31

**INTERNATIONAL SEARCH REPORT**
Information on patent family members

International application No.

**PCT/CN2020/110106**

| Patent document cited in search report | | | Publication date (day/month/year) | Patent family member(s) | | | Publication date (day/month/year) |
|---|---|---|---|---|---|---|---|
| CN | 201191052 | Y | 04 February 2009 | None | | | |
| CN | 210000201 | U | 31 January 2020 | None | | | |
| CN | 109974064 | A | 05 July 2019 | None | | | |
| CN | 106165192 | A | 23 November 2016 | US | 2016344082 | A1 | 24 November 2016 |
| | | | | CA | 2938162 | A1 | 06 August 2015 |
| | | | | EP | 3103158 | B1 | 13 May 2020 |
| | | | | JP | 2017512358 | A | 18 May 2017 |
| | | | | WO | 2015114637 | A1 | 06 August 2015 |
| | | | | CN | 106165192 | B | 17 September 2019 |
| | | | | JP | 6469119 | B2 | 13 February 2019 |
| | | | | KR | 20160117507 | A | 10 October 2016 |
| | | | | EP | 3103158 | A1 | 14 December 2016 |
| | | | | US | 10090569 | B2 | 02 October 2018 |
| | | | | IL | 247071 | A | 31 March 2019 |
| | | | | EP | 3103158 | A4 | 21 March 2018 |
| | | | | CN | 110588288 | A | 20 December 2019 |
| JP | 05124443 | A | 21 May 1993 | JP | 2518756 | B2 | 31 July 1996 |
| DE | 102009024497 | A1 | 09 December 2010 | WO | 2010142416 | A2 | 16 December 2010 |
| | | | | WO | 2010142416 | A3 | 12 May 2011 |
| CN | 107128153 | A | 05 September 2017 | CN | 107128153 | B | 04 June 2019 |

Form PCT/ISA/210 (patent family annex) (January 2015)